(19) Europäisches Patentamt
European Patent Office
Office européen des brevets

(11) EP 0 587 018 B1

(12) EUROPÄISCHE PATENTSCHRIFT

(45) Veröffentlichungstag und Bekanntmachung des Hinweises auf die Patenterteilung:
**15.04.1998 Patentblatt 1998/16**

(21) Anmeldenummer: **93113888.7**

(22) Anmeldetag: **31.08.1993**

(51) Int Cl.6: **C08L 25/12**, C08L 25/16, C08L 33/24
// (C08L25/12, 25:16, 51:04, 33:24)

(54) **Thermoplastische Formmasse**

Thermoplastic moulding composition

Composition de moulage thermoplastique

(84) Benannte Vertragsstaaten:
**AT BE CH DE ES FR GB IT LI NL**

(30) Priorität: **08.09.1992 DE 4229913**

(43) Veröffentlichungstag der Anmeldung:
**16.03.1994 Patentblatt 1994/11**

(73) Patentinhaber: **BASF Aktiengesellschaft**
**67063 Ludwigshafen (DE)**

(72) Erfinder:
- **Guentherberg, Norbert, Dr.**
**D-6720 Speyer (DE)**
- **Deckers, Andreas, Dr.**
**D-6700 Ludwigshafen (DE)**
- **Niessner, Norbert, Dr.**
**D-6701 Friedelsheim (DE)**

(56) Entgegenhaltungen:
**EP-A- 0 354 034** **EP-A- 0 484 722**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 587 018 B1

## Beschreibung

Es ist, z.B. aus EP-A-095 274 oder EP-A-216 505 bekannt, daß Polymethacrylimid mit SAN-ABS- oder ASA-Polymeren unter bestimmten Bedingungen mischbar ist.

EP-A-095 274 beschreibt Mischungen von Polymethacrylimid (Poly-N-Methyl-Glutarimid) unterschiedlichen Imidierungsgrades mit SAN unterschiedlicher Zusammensetzung, wobei SAN auch schlagzäh (ABS, ASA) modifiziert sein kann. Die Beispiele der genannten Druckschrift bezeichnen nur Produkte mit relativ niedrigem Imidierungsgrad (nach dortiger Definition < 70 %; d.h. Vicat von ca. < 150°C) als mit ABS verträglich. Insbesondere Beispiele 36 bis 41 zeigen, daß die Kerbschlagzähigkeit bei Blends von ABS und Polyglutarimid gegenüber reinem ABS abnimmt.

EP-A-216 505 führt Mischungen von Polyglutarimid mit Styrol/α-Methylstyrol/Acrylnitril-Terpolymeren auf, wobei jedoch nur Polyglutarimid als verträglich bezeichnet wird, das einen niedrigen Imidierungsgrad und/oder eine relativ niedrige Molmasse aufweist. Auch bestimmte Reinigungsoperationen sollen dabei eine Rolle spielen. Aus einer Druckschrift der Firma Rohm und Haas über Polyglutarimid ist bekannt, daß höher imidiertes Polyglutarimid mit SAN nur verträglich ist, wenn dessen Acrylnitrilgehalt zwischen 20 und 30 Gew.-% liegt. Über die Zähigkeit solcher Mischungen ist in den beiden letztgenannten Schriften nichts erwähnt.

Aufgabe war es, eine mit Polyglutarimid modifizierte ABS- bzw. ASA-Formmasse zur Verfügung zu stellen, deren SAN-Komponente mehr als 30 Gew.-% Acrylnitril enthält und somit eine höhere Wärmeformbeständigkeit und eine verbesserte Kälteschlagzähigkeit aufweist.

Es wurde gefunden, daß Mischungen aus schlagzäh modifiziertem SAN mit vorzugsweise etwa 35 Gew.-% AN (bezogen auf SAN), einem α-Methylstyrol/Acrylnitril-Copolymeren einerseits und einem Polyglutarimidpolymeren andererseits diese Anforderungen erfüllen. Es eignen sich speziell Polyglutarimide mit höherem Imidierungsgrad als Mischungspartner.

Unmittelbarer Erfindungsgegenstand ist eine Formmasse, die enthält, bezogen auf die Summe aus A und B,

A: 3 bis 97 Gew.-% eines gegebenenfalls schlagzäh modifizierten thermoplastischen Harzes A aus, bezogen auf A,

A1: 50 bis 100 Gew.-% einer Hartphase A1 mit einer Viskositätszahl (VZ) von 50 bis 100 ml/g aus, bezogen auf A1

A11: 5 bis 90 Gew.-% eines Copolymeren A11 aus, bezogen auf A11,

A111: 50 bis weniger als 70 Gew.-% Styrol oder eines kernsubstituierten Styrolderivats (A111),
A112: mehr als 30 bis 50 Gew.-% Acrylnitril (A112)

und
A12: 10 bis 95 Gew.-% eines Copolymeren A12 mit einer VZ von 50 bis 70 ml/g aus, bezogen auf A12,

A121: 50 bis 95 Gew.-% α-Methylstyrol (A121)
A122: 5 bis 50 Gew.-% Acrylnitril (A122)

und

A2: bis 50 Gew.-% eines teilchenförmigen Pfropfcopolymerisates aus, bezogen auf A2

A21: 15 bis 85 Gew.-% mindestens eines elastomeren Polymerisats A21 mit einer mittleren Teilchengröße von 30 bis 1000 nm auf der Grundlage eines ggf. in Form eines Copolymerisats vorliegenden 1,3-Polydiens oder eines vorzugsweise vernetzten kautschukelastischen Polyalkylacrylats (A211) als Pfropfgrundlage, und
A22: 15 bis 85 Gew.-% einer auf das elastomere Polymerisat A21 aufgepfropften Hülle A22 aus, bezogen auf A22,

A221: 50 bis 90 Gew.-% mindestens eines vinylaromatischen Monomeren A221 und
A222: 10 bis 50 Gew.-% mindestens eines polaren copolymerisierbaren ethylenisch ungesättigten Monomeren A222; und

B: 3 bis 97 Gew.-% eines mindestens 70 % Einheiten der allgemeinen Formel I aufweisenden Polymethacrylimids (Polyglutarimids) B

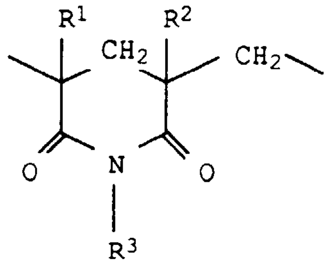

(I)

in der bedeuten

$R^1$ und $R^2$ unabhängig voneinander Wasserstoff, $C_1$-$C_4$-Alkyl oder $C_6$-$C_{18}$-Aryl und

$R^3$ Wasserstoff, $C_1$-$C_8$-Alkyl, $C_5$-$C_{12}$-Cycloalkyl oder $C_6$-$C_{18}$-Aryl.

Formmasse A

Das Styrol-Acrylnitril-(SAN-)Copolymere All wird in allgemein bekannter Weise hergestellt, wobei ein Copolymerisat von Styrol und Acrylnitril im Gewichtsverhältnis vorzugsweise um 65/35 mit einer Viskositätszahl (VZ) von 80 ml/g erhalten wird.

Allgemein geeignet sind SAN-Copolymere mit einem S/AN-Verhältnis von mehr als 30 : weniger als 70, die eine Viskositätszahl VZ von 60 bis 120 ml/g aufweisen. Geeignete Produkte dieser Art sind auch im Handel erhältlich.

Das erfindungsgemäße a-Methylstyrol-Acrylnitril-Copolymere A12 wird im Prinzip genau wie das entsprechende SAN-Copolymere erhalten. Eine Beschreibung des Herstellverfahrens mit allen Mengen- und Mengenverhältnisangaben ist z.B. in der DE-A-28 09 180 zu finden, auf die anstelle einer ausführlichen Abhandlung verwiesen wird.

Beschreibung des Polydien-Pfropfkautschuklatex

Der Pfropfkautschuk A2 besteht aus einem Elastomeren (Kautschuk) A21, das 85 bis 15 Gew.-%, vorzugsweise 80 bis 50 Gew.-% und insbesondere 70 bis 55 Gew.-%, jeweils bezogen auf A, ausmacht und z.B. nach den Angaben der EP-A-062 901 oder der DE-B-24 27 960 erhalten wird und einer auf das Elastomere gepfropften Hülle A22 ( A21+A22 = A2). Das Elastomere A21 ist entweder ein Polybutadien (evtl. auch Polyisopren, Polychloropren) auf und enthält, dann evtl. bezogen auf A21, bis zu 30 Gew.-% eines Comonomeren aus der Gruppe von Styrol oder Acrylnitril einpolymerisiert oder es handelt sich um einen Acrylatkautschuk. Das Elastomere weist i.A. eine mittlere Teilchengröße von 30 bis 1000 nm, bevorzugt 100 bis 750 nm auf (d50-Wert der integralen Massenverteilung. Die Pfropfhülle A22 weist mindestens ein vinylaromatisches Monomer mit 8 bis 12 Kohlenstoffatomen (a221) vorzugsweise Styrol und mindestens ein monoethylenisch-ungesättigtes Monomer (A222) vorzugsweise Acrylnitril auf. Die Pfropfhülle wird z.B. in bekannter Weise durch Emulsionspolymerisation der Pfropfmonomeren A221, A222 in Gegenwart des vorgebildeten Kautschuks A21 erhalten. Die Pfropfhülle kann auch in zwei Verfahrensstufen erhalten werden, wie es beispielsweise EP-A-0 258 714 lehrt.

Die genauen Polymerisationsbedingungen für den verwendeten Kautschuk, insbesondere Art, Dosierung und Menge des Emulgators, werden im einzelnen so gewählt, daß der erhaltene Latex des Pfropfcopolymerisats einen d50-Wert im Bereich von etwa 100 bis 750 nm, vorzugsweise 100 bis 600 nm besitzt; Emulsionspolymerisate mit kleineren mittleren Teilchengrößen z.B. von 60 bis 150 nm werden in bekannter Weise agglomeriert (vgl. DE-B-24 27 960).

Komponente B

Als Polyglutarimid B enthalten die erfindungsgemäßen Formmassen in einer Menge von 3 bis 97, vorzugsweise 5 bis 50 Gew.-% eines durch Umsetzen von Poly(meth)acrylester mit Ammoniak oder einem primären Amin erhältlichen Polymerisats mit einem Imidierungsgrad von mehr als 70 %.

Dieses Polyglutarimid soll demnach mindestens 70 % Einheiten der allgemeinen Formel I aufweisen; der Rest sind i.a. unveränderte Einheiten des (Meth)acrylsäureesters, der dem Ausgangspolymeren zugrundeliegt.

In den Einheiten der Formel I bedeuten $R^1$ und $R^2$ unabhängig voneinander Wasserstoff, eine $C_1$-$C_4$-Alkyl oder $C_6$-$C_{18}$-Aryl und $R^3$ bedeutet Wasserstoff, $C_1$-$C_8$-Alkyl, $C_5$-$C_{12}$-Cycloalkyl oder $C_6$-$C_{18}$-Aryl.

Bevorzugte Reste $R^1$ und $R^2$ sind Wasserstoff und die Methylgruppe.

Dies entspricht einem Polymerisat B, welches im wesentlichen aus Monomereinheiten von Methacrylsäureestern und/oder Acrylsäureestern aufgebaut ist und anschließend imidisiert worden ist.

Bevorzugte Reste $R^3$ sind Wasserstoff, eine $C_1$-$C_4$-Alkylgruppe, wobei der Methylrest besonders bevorzugt ist oder eine Cyclohexylgruppe. Bevorzugte Arylreste mit 6 bis 18 Kohlenstoffatomen sind solche, die 1 bis 4 Methylengruppen als Brückenglied zwischen Stickstoff und aromatischem Rest enthalten, wobei der Benzylrest bevorzugt ist.

Außer Acryl- und Methacrylsäureester können die zu imidisierenden Polymerisate in untergeordneter Menge als Bausteine auch andere ethylenisch ungesättigte Monomere enthalten, z.B. imidisierbare Bausteine wie Acrylsäure, (Meth)acrylsäure, Maleinsäureanhydrid, Itaconsäureanhydrid und ferner z.B. (Meth)Acrylnitril, Styrol und dessen kernsubstituierte Alkylderivate, Ethylen, Propylen und Butadien. Die zu imidisierenden Polymerisate können einstufig oder mehrstufig erzeugte Polymerisate sein, wobei bei den zuletzt genannten die letzte Stufe Gruppen enthalten muß, die imidisiert werden können.

Im allgemeinen enthalten die Polymerisate mindestens 50 Gew.-%, bevorzugt mehr als 80 Gew.-%, und ganz besonders bevorzugt 95 bis 100 Gew.-% Acryl- und/oder Methacrylsäureester. Bevorzugt sind Ester, bei denen der Esteranteil 1 bis 20 Kohlenstoffatome enthält. Aus wirtschaftlichen Gründen und wegen seiner leichten Zugänglichkeit ist Methylmethacrylat besonders bevorzugt. Gut brauchbar sind aber auch Polymerisate aus Monomersystemen, die neben Comonomeren mindestens 80 Gew.-% Methylmethacrylat enthalten.

Das mittlere Molekulargewicht (Gewichtsmittel) der als Ausgangsstoffe in Betracht kommenden Polymerisate wird nach DIN 7745 Teil 1 bestimmt. Die Viskositätszahl VZ von PMMA-Formmassen wird wie üblich nach DIN 7745, Teil 2 (2,6 g/l in $CHCl_3$ bei 25°C) bestimmt und beträgt zweckmäßig 30 bis 100 ml/g, bevorzugt 50 bis 80 ml/g.

Die Polymerisate B mit Imidgruppen können in Anlehnung an die in den US-A-4 246 374 und EP-A-234 726 beschriebenen Verfahren erhalten werden. Dabei handelt es sich um eine polymeranaloge Umsetzung mit geeigneten primären Aminen $R^3NH_2$ oder Ammoniak:

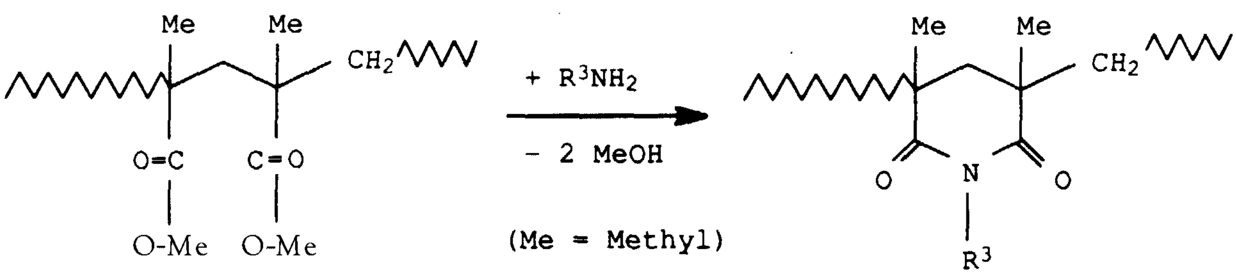


Wegen ihrer leichten Zugänglichkeit sind Ammoniak und Methylamin die am meisten bevorzugten Verbindungen der Formel $R^3NH_2$, doch können auch andere Amine mit gutem Erfolg benutzt werden. Andere geeignete Amine sind beispielsweise Ethyl-, n-Propyl-, n-Butyl-, Heptyl-, Hexyl-, Octyl-, Nonyl-, Decyl-, Dodecyl-, Hexadecyl-, Octadecyl-, Isobutyl-, sec.-Butyl-, t-Butyl, Isopropyl-, 2-Ethylhexyl-, Phenethyl-, Allyl-, Benzyl-, para-Chlorbenzyl- und Dimethoxyphenethyl-Amin; ferner Alanin, Glycin, 3'-Aminoacetophenon, 2-Aminoanthrachinon und p-Aminobenzoesäure sowie alkylsubstituierte Cyclohexylamine wie Trimethylcyclohexylamin.

Weitere geeignete Amine sind Cyclohexylamin, 2-Amino-4,6-dimethylpyridin, 3-Aminophthalimid, 2-Aminopyrimidin, 2-Aminothiazol, 5-Amino-1-H-tetrazol, Anilin, Bromanilin, Dibromanilin, Tribromanilin, Chloranilin, Dichloranilin, Trichloranilin, p-Phenetidin und p-Toluidin.

Der Gehalt des Polyglutarimids B an Imidgruppen (Imidisierungsgrad) beträgt im allgemeinen wenigstens 70, insbesondere 80 bis 95 % und ist nach folgender Gleichung berechenbar:

$$\text{Imidisierungsgrad [\%]} = \frac{\text{N-Gehalt aus der Elementaranalyse}}{\text{theoretischer N-Gehalt bei 100 \% Imidisierung}} \times 100\ \%$$

Für den Fall eines Imidisierungsgrades von 100 % bildet die Glutarimidstruktur die alleinigen wiederkehrenden Einheiten in der Polymerkette.

Beispiele

Herstellung eines Polymerlatex für die nachfolgenden Beispiele

Herstellung eines Pfropfkautschuks A2 auf Polybutadiengrundlage (Rezeptur A2-O1)

Durch Polymerisation von 60 Teilen Butadien in Gegenwart einer Lösung von 0,6 Teilen tert.-Dodecylmercaptan, 0,7 Teilen $C_{14}$-Na-Alkylsulfonat als Emulgator, 0,2 Teilen Kaliumperoxodisulfat und 0,2 Teilen Natriumpyrosulfat in 80 Teilen Wasser bis zu einem Umsatz von 98 % wird bei 65°C ein Polybutadienlatex hergestellt.

Es wird ein Polybutadien erhalten, dessen mittlere Teilchengröße bei 100 nm liegt und daher durch Zusatz von 25 Teilen einer Emulsion eines Copolymeren aus 96 Teilen Ethylacrylat und 4 Teilen Methacrylsäureamid mit einem Feststoffgehalt von 10 Gew.-Teilen agglomeriert wird, wobei sich eine mittlere Teilchengröße von 350 nm einstellt. Nach Zusatz von 40 Teilen Wasser, 0,4 Teilen Na-$C_{14}$-Alkylsulfonat, und 0,2 Teilen Kaliumperoxodisulfat wurden 40 Teile einer Mischung aus Styrol und Acrylnitril im Verhältnis 70 : 30 innerhalb von 4 Stunden zugeführt. Die Polymerisation erfolgte unter Rühren des Ansatzes bei 75°C. Der Umsatz, bezogen auf Styrol/Acrylnitril war praktisch quantitativ.

Die erhaltene Pfropfkautschukdispersion wurde mittels wäßriger Magnesiumsulfatlösung gefällt und entwässert.

Herstellung eines Pfropfkautschuks auf Acrylatgrundlage (Rezeptur A2-02)

Herstellung der Pfropfgrundlage auf Acrylesterbasis erfolgte nach folgender allgemeiner Vorschrift:

160 g eines Gemisches aus 98 Teilen Butylacrylat und 2 Teilen Dicyclopentadienylacrylat (DCPA) werden in 1500 g Wasser unter Zusatz von 5 g des Na-Salzes einer $C_{12}$-$C_{18}$-Paraffinsulfonsäure, 3 g Kaliumperoxodisulfat, 3 g Natriumhydrogencarbonat, 1,5 g Natriumpyrophosphat unter Rühren auf 60°C erwärmt. 15 min nach dem Anspringen der Polymerisationsreaktion werden innerhalb von 3 Stunden weitere 840 g der Monomerenmischung zugegeben. Nach Beendigung der Monomerzugabe wurd die Emulsion noch 1 Stunde bei 60°C gehalten.

Herstellung des Pfropfpolymerisats

2100 g der nach obiger Vorschrift hergestellten Emulsion werden mit 1150 g Wasser und 2,7 g Kaliumperoxodisulfat gemischt und unter Rühren auf 65°C erwärmt. Nach Erreichen der Reaktionstemperatur werden im Lauf von 3 Stunden 560 g eines Gemisches aus 75 Teilen Styrol und 25 Teilen Acrylnitril zudosiert. Nach Beendigung der Zugabe wird die Emulsion noch 2 Stunden bei 65°C gehalten.

Man fällt mittels Magnesiumsulfatlösung, wäscht mit Wasser, entwässert und arbeitet in eine SAN-Matrix ein.

Neben den vorstehend beschriebenen Kautschuken wurde noch bereitgehalten:

Als Komponente A11-1:

Ein Copolymer aus 65 Gew.-% Styrol und 35 Gew.-% Acrylnitril mit einer VZ von 80 ml/g

Als Komponente A12-1:

Ein Copolymer aus 70 Gew.-% $\alpha$-Methyl-Styrol und 30 Gew.-% Acrylnitril mit einer VZ von 60 ml/g

Komponente B

Es wurden handelsübliche Poly-N-methyl-glutarimide eingesetzt, die durch folgene Angaben charakterisiert sind:

| | B-1 | B-2 | |
|---|---|---|---|
| Imidierungsgrad | 74 | 87 | % |
| Glastemperatur Tg | 144 | 160 | °C |
| Vicat B | 135 | 150 | °C |
| VZ | 82 | 70 | ml/g |

Tabelle

| Beispiel | Kautschuk | | Hartmatrix | | Komponente B | | Vicat B | $a_K$, -40°C |
|---|---|---|---|---|---|---|---|---|
| | A2-01 | A2-02 | A11-1 | A12-1 | B-1 | B-2 | | |
| 1 | 18 | -- | 9 | 73 | -- | -- | 112 | 1,8 * |
| 2 | 18 | -- | 9 | 63 | 10 | -- | 115 | 2,3 |
| 3 | 18 | -- | 9 | 43 | 30 | -- | 120 | 2,8 |
| 4 | 18 | -- | 9 | 63 | -- | 10 | 117 | 2,0 |
| 5 | 18 | -- | 9 | 53 | -- | 20 | 120 | 2,2 |
| 6 | 30 | -- | 38 | 22 | -- | 10 | 106 | 4,3 |
| 7 | 24 | -- | 30 | 26 | -- | 20 | 112 | 5,8 |
| 8 | -- | 33 | 31 | 36 | -- | -- | 105 | n.g. |
| 9 | -- | 33 | 31 | 16 | -- | 20 | 109 | n.g. |
| V1 | 18 | -- | 9 | 73 | -- | -- | 113 | 1,9 |
| V2 | 30 | -- | 38 | 32 | -- | -- | 104 | 4,1 |
| V3 | 30 | -- | 38 | 12 | -- | 20 | 106 | 4,3 |

* = Vergleichsversuch
n.g. = nicht gemessen

Vergleichsversuch 3 zeigt, daß bei zu geringem Gehalt an α-Methylstyrolcopolymer kein ausreichender Effekt mehr beobachtet wird.

**Patentansprüche**

**1.** Thermoplastische Formmasse auf der Grundlage eines polymethacrylimid-modifizierten ABS- oder ASA-Harzes, im wesentlichen enthaltend, bezogen auf die Summe aus A und B,

A: 3 bis 97 Gew.-% eines gegebenenfalls schlagzäh modifizierten thermoplastischen Harzes A aus, bezogen auf A,

A1: 50 bis 100 Gew.-% einer Hartphase A1 mit einer Viskositätszahl (VZ) von 50 bis 100 ml/g aus, bezogen auf A1

A11: 5 bis 90 Gew.-% eines Copolymeren A11 aus, bezogen auf A11,

A111: 50 bis weniger als 70 Gew.-% Styrol oder eines kernsubstituierten Styrolderivats (A111),

A112: mehr als 30 bis 50 Gew.-% Acrylnitril (A112)

und

A12: 10 bis 95 Gew.-% eines Copolymeren A12 mit einer VZ von 50 bis 70 ml/g aus, bezogen auf A12,

A121: 50 bis 95 Gew.-% α-Methylstyrol (A121)

A122: 5 bis 50 Gew.-% Acrylnitril (A122)

und

A2: bis 50 Gew.-% eines teilchenförmigen Pfropfcopolymerisates aus, bezogen auf A2

A21: 15 bis 85 Gew.-% mindestens eines elastomeren Polymerisats A21 mit einer mittleren Teilchengröße von 30 bis 1000 nm auf der Grundlage eines ggf. in Form eines Copolymerisats vorliegenden 1,3-Polydiens oder eines vorzugsweise vernetzten kautschukelastischen Polyalkylacrylats (A211) als Pfropfgrundlage, und

A22: 15 bis 85 Gew.-% einer auf das elastomere Polymerisat A21 aufgepfropften Hülle A22 aus, bezogen auf A22,

A221: 50 bis 90 Gew.-% mindestens eines vinylaromatischen Monomeren A221 und

A222: 10 bis 50 Gew.-% mindestens eines polaren copolymerisierbaren ethylenisch ungesättigten Monomeren A222; und

B: 3 bis 97 Gew.-% eines mindestens 70 % Einheiten der allgemeinen Formel I aufweisenden Polymethacrylimids (Polyglutarimids) B

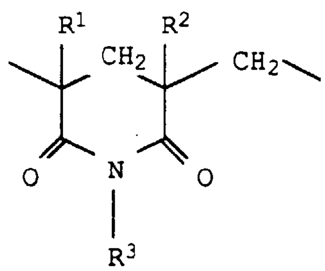

(I)

in der bedeuten

$R^1$ und $R^2$ unabhängig voneinander Wasserstoff, $C_1$-$C_4$-Alkyl oder $C_6$-$C_{18}$-Aryl und

$R^3$ Wasserstoff, $C_1$-$C_8$-Alkyl, $C_5$-$C_{12}$-Cycloalkyl oder $C_6$-$C_{18}$-Aryl.

## Claims

1. A thermoplastic molding material based on a polymethacrylimide-modified ABS or ASA resin, and essentially containing, based on the sum of A and B,

A: from 3 to 97 % by weight of an optionally impact-modified thermoplastic resin A comprising, based on A,

A1: from 50 to 100 % by weight of a hard phase A1 having a viscosity number (VN) of from 50 to 100 ml/g, comprising, based on A1,

A11: from 5 to 90 % by weight of a copolymer A11 comprising, based on A11,

A111: from 50 to less than 70 % by weight of styrene or a ring-substituted styrene derivative (A111),
A112: from more than 30 to 50 % by weight of acrylonitrile (A112)

and
A12: from 10 to 95 % by weight of a copolymer A12 having a VN of from 50 to 70 ml/g, comprising, based on A12,

A121: from 50 to 95 % by weight of $\alpha$-methylstyrene (A121)
A122: from 5 to 50 % by weight of acrylonitrile (A122)

and
A2: up to 50 % by weight of a particulate graft copolymer comprising, based on A2,

A21: from 15 to 85 % by weight of at least one elastomeric polymer A21 having a median particle size of from 30 to 1000 nm, based on a 1,3-polydiene that may be present in the form of a copolymer or on a preferably crosslinked rubber-elastic polyalkyl acrylate (A211) as grafting base, and
A22: from 15 to 85 % by weight of a sheath A22 grafted onto the elastomeric polymer A21 and comprising, based on A22,

A221: from 50 to 90 % by weight of at least one aromatic vinyl monomer A221 and
A222: from 10 to 50 % by weight of at least one polar copolymerizable ethylenically unsaturated monomer A222; and

B: from 3 to 97 % by weight of a polymethacrylimide (polyglutarimide) B having at least 70 % of units of the formula I

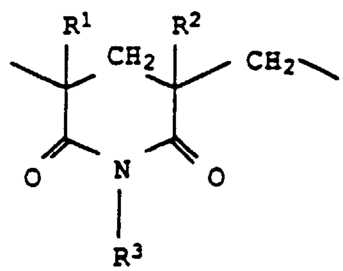

(I)

in which

$R^1$ and $R^2$ are, independently of one another, hydrogen, $C_1$-$C_4$-alkyl or $C_6$-$C_{18}$-aryl, and
$R^3$ is hydrogen, $C_1$-$C_8$-alkyl, $C_5$-$C_{12}$-cycloalkyl or $C_6$-$C_{18}$-aryl.

**Revendications**

**1.** Masse de moulage thermoplastique sur base d'une résine d'ABS ou d'ASA modifiée par du polyméthacrylimide, contenant essentiellement, par rapport à la somme de A et de B,

A: 3 à 97 % en poids d'une résine A thermoplastique éventuellement modifiée du point de vue de la résistance aux chocs, constituée de, par rapport à A,

A1 : 50 à 100 % en poids d'une phase rigide A1 avec un nombre de viscosité (NV) de 50 à 100 ml/g, constituée de, par rapport à A1

A11 : 5 à 90 % en poids d'un copolymère A11 constitué de, par rapport à A11,

A111 : 50 à moins de 70 % en poids de styrène ou d'un dérivé du styrène substitué sur le noyau (A111),
A112 : plus de 30 à 50 % en poids d'acrylonitrile (A112)

et
A12 : 10 à 95 % en poids d'un copolymère A12 avec un NV de 50 à 70 ml/g, constitué de, par rapport à A12,

A121 : 50 à 95 % en poids d'α-méthylstyrène (A121)
A122 : 5 à 50 % en poids d'acrylonitrile (A122)

et

A2 : jusqu'à 50 % en poids d'un copolymère greffé particulaire, constitué de, par rapport à A2

A21 : 15 à 85 % en poids d'au moins un polymère élastomère A21 avec une granulométrie moyenne de 30 à 1.000 nm sur la base d'un 1,3-polydiène, se trouvant éventuellement sous forme d'un copolymère, ou d'un poly(acrylate d'alkyle) (A211) caoutchouteux, de préférence réticulé, à titre de base de greffage, et
A22: 15 à 85% en poids d'une enveloppe A22 greffée sur le polymère élastomère A21, constituée de, par rapport à A22,

A221: 50 à 90 % en poids d'au moins un monomère vinylaromatique A221 et
A222 : 10 à 50 % en poids d'au moins un monomère A222 polaire, copolymérisable et éthyléniquement insaturé ;

et

B : 3 à 97 % en poids d'un polyméthacrylimide (polyglutarimide) B présentant au moins 70 % d'unités répondant à la formule générale I

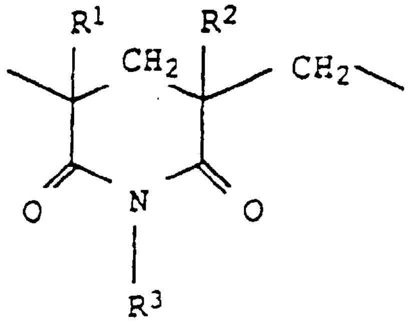

(I)

dans laquelle

$R^1$ et $R^2$ représentent indépendamment l'un de l'autre un atome d'hydrogène, un groupe alkyle en $C_1$ à $C_4$ ou un groupe aryle en $C_6$ à $C_{18}$ et
$R^3$ représente un atome d'hydrogène, un groupe alkyle en $C_1$ à $C_8$, un groupe cycloalkyle en $C_5$ à $C_{12}$ ou un groupe aryle en $C_6$ à $C_{18}$.